# EUROPÄISCHE PATENTANMELDUNG

(11) **EP 2 135 781 A2**
(43) Veröffentlichungstag der Anmeldung: **23.12.2009**
(21) Anmeldenummer: 09160961.0
(22) Anmeldetag: 25.05.2009
(51) Int. Cl.: B60S 1/38

(54) **Federleiste, Herstellverfahren und Wischer für die Reinigung insbesondere einer Fahrzeugscheibe**

(30) Priorität: 10.06.2008 DE 102008002329
(71) Anmelder: ROBERT BOSCH GMBH, 70442 Stuttgart (DE)
(72) Erfinder: De Block, Peter, 3545 Halen (BE)

(57) **Zusammenfassung**

Die Erfindung betrifft eine Federleiste (2) beziehungsweise einen Wischer (1) zur Reinigung einer Fahrzeugscheibe (10). Bei einem Wischer (1) besteht das Problem, dass die Scheibenreinigung insbesondere von der Andruckkraft auf die Scheibe (10) und auch von Windkräften mehr oder weniger stark beeinflusst wird. Zur Lösung dieses Problems ist erfindungsgemäß vorgesehen, als Ausgangsmaterial für die Federleiste (2) ein Hohlprofil, beispielsweise ein Rohr- oder U-Profil zu verwenden. Zur Erzeugung einer gleichmäßigen Anpresskraft auf die Scheibe (10) wird die Steifigkeit des Rohr- oder U-Profils ortsabhängig angepasst. Die ortsabhängige Anpassung der Steifigkeit der Federleiste (2) erfolgt durch Verändern, insbesondere durch Flachwalzen des Querschnitts. Dieses ist in vorteilhafter Weise sehr einfach technisch durchführbar und kann praktisch für jeden Scheibentyp individuell durchgeführt werden.

## Beschreibung

Die Erfindung betrifft eine Federleiste, ein Herstellverfahren beziehungsweise einen Wischer zur Reinigung insbesondere einer Fahrzeugscheibe nach der Gattung der nebengeordneten Ansprüche 1, 8 und 9. Wischer haben die Aufgabe, auf der Scheibe befindliches Wasser und/oder Schmutz mit einer über die Scheibe verfahrbaren Wischleiste zu entfernen und für klare Sicht des Fahrers zu sorgen. Eine entscheidende Voraussetzung zum Erreichen einer guten Wischqualität ist, dass die Wischlippe der Wischleiste, die üblicherweise aus einem elastischen Gummi gefertigt ist, an jedem Berührungspunkt zur Scheibe mit nahezu konstanter Anpresskraft auf die Scheibe gedrückt wird. Die notwendige Anpresskraft wird über einen Wischarm erzeugt, der an einem Befestigungspunkt des Wischers meist mittig angeordnet ist.

Es ist bereits weiterhin bekannt, dass der Wischer mit einer im Querschnitt integrierten Federleiste ausgebildet ist. Die Federleiste ist aus einem Stahlfederband mit einem rechteckigen Querschnitt gebildet und wird durch Biegen mit einem vorgegebenen Krümmungsradius vorgespannt. Der Krümmungsradius wird so gewählt, dass bei einer mittigen Krafteinleitung auch unter Berücksichtigung einer geformten Scheibe lokal eine möglichst gleichmäßige Anpresskraft über die gesamte Länge der Wischleiste entsteht. Da sich jedoch während des Wischens der Krümmungswinkel zur Scheibe hin ändert, kann die lokale Anpresskraft stellenweise zu niedrig oder zu groß sein. Bei zu niedriger Anpresskraft können auf der Scheibe Schlieren entstehen, die zu einer schlechten Durchsicht führen. Bei zu großer Anpresskraft wird die Wischlippe dagegen lokal überlastet, so dass sich der Verschleiß an der Wischlippe erhöht und dann der Wischer frühzeitig ersetzt werden muss.

Es ist des weiteren bekannt, dass durch Windkräfte, insbesondere durch den Fahrtwind eine optimale Einstellung der lokalen Anpresskraft auf die Scheibe erschwert wird. Zur Lösung dieses Problems wurde in der EP 0 528 643 A1 vorgeschlagen, zur Einstellung der Anpresskraft auf die Scheibe über einen Biegeradius zusätzlich die Breite und Dicke der Federleiste über ihre Länge zu verändern. Dadurch soll erreicht werden, dass die Steifigkeit der Federleiste an die verschiedenen Radien der Scheibe noch besser angepasst und damit eine günstigere Kraftverteilung erreicht werden kann. Es hat sich jedoch herausgestellt, dass ein derartiger Wischer sehr schwierig und nur mit viel Aufwand herstellbar ist, so dass sich dieses Verfahren nicht durchgesetzt hat.

Der Erfindung liegt die Aufgabe zu Grunde, eine Federleiste beziehungsweise einen Wischer zu bilden, der einfach und kostengünstig herstellbar ist und bei dem dennoch unter allen Betriebbedingungen eine zuverlässige Funktion sichergestellt ist. Diese Aufgabe wird mit den Merkmalen der nebengeordneten Ansprüche 1, 8 und 9 gelöst.

Bei der erfindungsgemäßen Federleiste, dem Herstellverfahren beziehungsweise dem Wischer zur Reinigung insbesondere einer Fahrzeugscheibe mit den kennzeichnenden Merkmalen der nebengeordneten Ansprüche 1, 8 und 9 ergibt sich der Vorteil, dass die Federleiste aus einem Hohlprofil oder einem U-Profil gefertigt ist, das sich leicht verarbeiten lässt. Als besonders vorteilhaft wird angesehen, dass durch einfaches Verformen des Hohlprofils oder des U-Profils jede gewünschte Steifigkeit eingestellt werden kann. Die Verformung des Hohlprofils beziehungsweise des U-Profils wird dabei in Abhängigkeit vom Ort des Wischers individuell für jeden Scheibentyp unter Berücksichtigung des Krümmungsradius, von Windeinflüssen und der geforderten Anpresskraft so gewählt, dass die Anpresskraft über die gesamte Länge der Federleiste gleichmäßig verteilt wird. Dadurch entfallen komplizierte Konstruktionen für die Federleiste und den Wischer, so dass sich bei der Herstellung erhebliche Kostenvorteile ergeben. Hinzu kommt, dass wegen der gleichmäßigeren Verteilung der Auflagekraft der Verschleiß des Wischers reduziert und damit die Nutzungsdauer verbessert wird.

Durch die in den abhängigen Ansprüchen aufgeführten Maßnahmen sind vorteilhafte Weiterbildungen und Verbesserungen der in den nebengeordneten Ansprüche 1,8 und 9 vorgeschlagenen Federleiste, des Herstellverfahrens beziehungsweise des Wischers gegeben. Als weiterer Vorteil wird angesehen, dass der Querschnitt und/oder die Steifigkeit entlang der Federleiste unterschiedlich ist und mit zunehmendem Abstand vom Ort der Anpresskraft durch einfaches Zusammendrücken des Hohlprofils oder des U-Profils reduzierbar ist. Dadurch wird auf sehr einfache und kostengünstige Weise ortsabhängig eine individuelle Einstellung der Steifigkeit erreicht.

Erfindungsgemäß ist vorgesehen, die Steifigkeit der Federleiste im Bereich der einwirkenden Andruckkraft hoch und in den Randbereichen niedriger auszubilden.

Für die Federleiste kann beispielsweise in Hohlprofil verwendet werden, das rohrförmig ausgebildet ist und einen entsprechenden Querschnitt aufweist.

In weiterer Ausgestaltung der Erfindung ist vorgesehen, die Materialstärke, insbesondere die Höhe und damit die Querschnittfläche des Hohlprofils beziehungsweise des U-Profils über die Länge zu variieren und dadurch die Federleiste mit einer ortsabhängigen Steifigkeit auszubilden. Das erfolgt bei der Herstellung der Federleiste durch Zusammenpressen des Hohlprofils beziehungsweise des U-Profils, vorzugsweise maschinell durch Verändern des Flachwalzgrades.

Als Ausgangsmaterial für die Federleiste ist vorzugsweise ein Federstahl oder ein ähnliches Metall verwendbar. Alternativ ist ein Kunststoff mit entsprechenden Feder- und Verformungseigenschaften verwendbar.

Ein weiterer Aspekt der Erfindung besteht auch darin, an der Federleiste wenigstens eine Bohrung oder einen Längsschlitz anzubringen, an der ein elastischer Gummi des Wischers befestigt werden kann. Der elastische Gummi ist mit wenigstens einer entsprechend verzahnbaren Noppe oder Lippe ausgebildet, so dass die Federleiste nach dem Zusammenfügen mit dem elastischen Gummi mechanisch gehalten wird. Dadurch kann die Andruckkraft in der gewünschten Weise auf die Wischlippe des Wischers gleichmäßig übertragen werden kann.

In alternativer Ausgestaltung der Erfindung ist auch vorgesehen, in Längsrichtung des elastischen Gummis des Wischers ein Hohlprofil auszubilden, in das die Federleiste einschiebbar ist.

Zwei Ausführungsbeispiele der Erfindung sind in der Zeichnung dargestellt und werden in der nachfolgenden Beschreibung näher erläutert.
Figur 1 zeigt im Querschnitt ein erstes Ausführungsbeispiel eines erfindungsgemäßen Wischers beim Wischen nach links,
Figur 2 zeigt im Querschnitt ein zweiten Ausführungsbeispiel eines erfindungsgemäßen Wischers beim Wischen nach rechts,
Figur 3 zeigt in schematischer Seitenansicht eine erfindungsgemäße Federleiste,
Figur 4 zeigt von der Federleiste der Figur 3 einen Querschnitt an der Stelle A,
Figur 5 zeigt von der Federleiste der Figur 3 einen Querschnitt an der Stelle B,
Figur 6 zeigt von der Federleiste bei einem weiteren Ausführungsbeispiel einen Querschnitt an der Stelle A und
Figur 7 zeigt von der Federleiste bei dem weiteren Ausführungsbeispiel einen Querschnitt an der Stelle B.

Durch die erfindungsgemäße Federleiste soll die Zuverlässigkeit des Wischersystems unter allen Betriebsbedingungen sichergestellt werden. Eine gute Wischqualität soll insbesondere auch bei vorhandenen Abweichungen zwischen dem idealen Biegeradius der Federleiste und dem Krümmungsradius der Scheibe oder bei sich ändernden Anpresskräften der Wischleiste auf die Scheibe sichergestellt werden. Dies wird durch eine einfache und kostengünstig herstellbare Federleiste erreicht, deren Steifigkeit über die Länge des Wischers an die Erfordernisse einfach angepasst werden kann, wie nachfolgend näher erläutert wird.

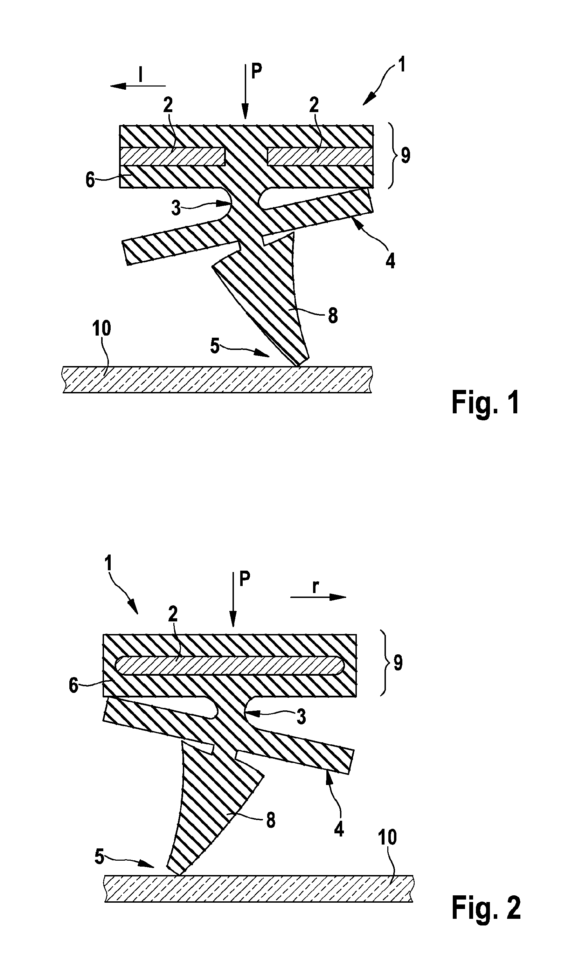

Die beiden Figuren 1 und 2 zeigen zunächst in schematischer Darstellung die prinzipielle Funktion eines erfindungsgemäßen Wischers 1, der über eine Scheibe 10 gleitet. Der Wischer 1 ist im Querschnitt dargestellt, um seinen geometrischen Aufbau besser erkennen zu können. Entsprechend der Figur 1 wird angenommen, dass der Wischer 1 entsprechend des Pfeils l über die Scheibe 10 nach links gleitet.

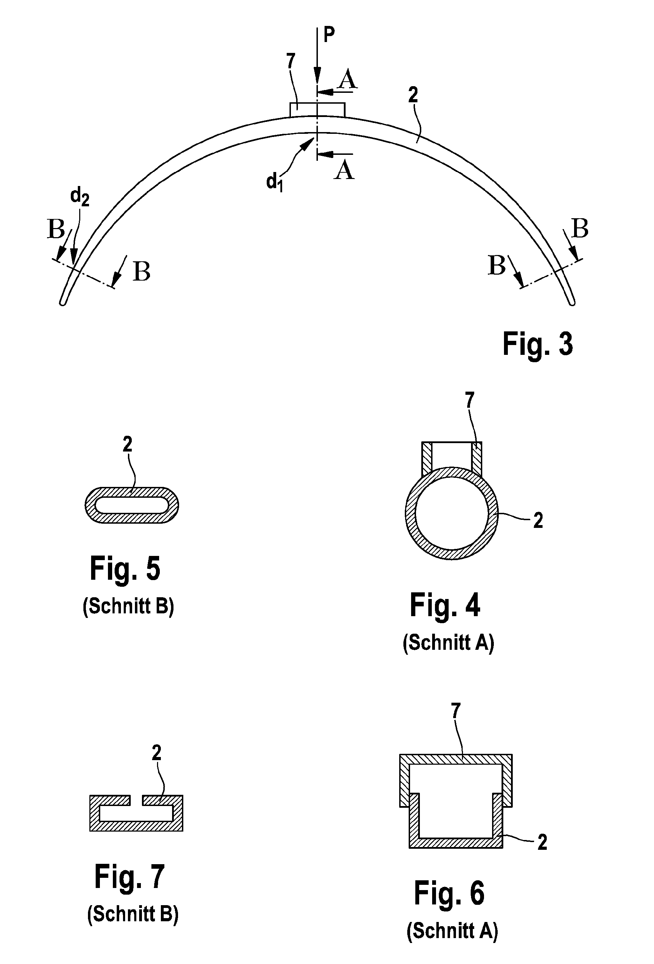

Der Wischer 1 in Figur 1 weist im wesentlichen ein Wischerblatt 6 auf, das aus einem elastischen Gummi geformt ist. Die Länge des Wischerblattes 6 ist auf die geometrische Größe der zu reinigen Scheibe 10 abgestimmt. Es ist vorgesehen, dass der Wischer 1 insbesondere zum Reinigen einer Scheibe eines Fahrzeugs verwendbar ist, wobei die Fahrzeugscheibe beliebig gewölbt oder gebogen ausgebildet sein kann. Zum Reinigen von Fahrzeugscheiben wird ein alternierend schwenkender Wischerarm verwendet, der parallel zur Oberfläche der Scheibe 10 geführt wird. Den Wischerarm wird mittels einer Feder an die Scheibe 10 gedrückt und überträgt eine Andruckkraft P auf den Wischer 1. Der Wischerarm ist über einen Adapter 7 (Figur 3) etwa mittig am Wischer 1 befestigt, so dass der Wischer 1 über die Scheibe 10 gleiten kann. Die Andruckkraft P ist vorgegeben und wird unter Berücksichtung der geometrischen Abmessungen, der Scheibenkrümmung, des Windeinflusses und unter Berücksichtigung des Fahrtwindes so gewählt, dass eine sichere Funktion gewährleistet und die Scheibe 10 zuverlässig gereinigt wird.

Prinzipiell ist der Wischer 1 jedoch auch zum Reinigen von beliebigen anderen Scheiben oder Flächen geeignet.

Die punktuell wirkende Andruckkraft P muss nun mit Hilfe einer Federleiste 2 über die gesamte Länge des Wischers 1 in der Weise verteilt werden, dass im gesamten Verfahrbereich des Wischers 1 die lokale Anpresskraft an einer Wischlippe 5 des Wischers 1 in einem wohl definierten Bereich liegt, um eine gute Wischqualität zu erreichen. Bei lokal zu niedriger Anpresskraft hebt die Wischlippe 5 von der Scheibe 10 ab. Das führt zur Streifenbildung. Bei lokal zu hoher Anpresskraft wird die Wischlippe 5 lokal überlastet. Dadurch entstehen lokale Deformationen an der Wischlippe 5, die ebenfalls zu Wischfehlern führen können.

Wie Figur 1 entnehmbar ist, ist das Wischerblatt 6 profiliert ausgebildet. Im oberen Teil ist das Wischerblatt 6 mit einem quer angeordneten Doppelsteg 9 ausgebildet, so dass zwischen den beiden Stegen des Doppelstegs 9 rechts und links eine Nut gebildet wird. In die beiden Nuten ist eine Federleiste 2 eingelegt. Die Federleiste 2 ist beispielsweise zweiteilig ausgebildet. In diesem Fall sind zusätzliche Halteklammern zur Fixierung vorsehbar, damit die beiden Teile der Federleiste 2 nicht aus den Nuten herausfallen können (in Figur 1 nicht dargestellt).

Es ist weiterhin vorgesehen, dass die beiden Teile der Federleiste 2 in den Nuten des Doppelstegs 9 beispielsweise gleitend gelagert sind, so dass sich die Wischleiste 8 besser an den Biegeradius der Scheibe 10 anpassen kann.

Alternativ ist vorgesehen, dass die Federleiste 2 einteilig ausgebildet ist. Sie ist beispielsweise mit wenigstens einer Bohrung oder einem ausreichend dimensionierten Längsschlitz versehen, durch den der obere Steg durchgefädelt werden kann. Generell ist die Fixierung der Federleiste 2 derart durchgeführt, dass eine sichere Übertragung der Andruckkraft P auf eine darunter angeordnete Wischleiste 8 gewährleistet ist.

Wie Figur 1 weiter entnehmbar ist, ist unterhalb des Doppelsteges 9 ein weiterer Quersteg angeordnet, der als Anschlagsteg 4 ausgebildet ist. Der Anschlagsteg 4 ist über einen Kippsteg 3 mit dem Doppelsteg 9 verbunden. Der Anschlagsteg 4 ist derart ausgebildet, dass er den Biegewinkel der Wischleiste 8, die unterhalb des Anschlagstegs 4 angeordnet ist, begrenzt. In Figur 1 ist für die Wischleiste 8 der maximale Biegewinkel dargestellt, wenn sich der Wischer 1 nach links in Richtung l bewegt. Die Wischleiste 8 ist keilförmig geformt und ist zum Wischen für jede Wischrichtung mit einer Wischkante 5 ausgebildet.

Figur 2 zeigt einen Querschnitt eines zweites Ausführungsbeispiel der Erfindung. Die prinzipielle Ausbildung des Wischers 1 ist ähnlich, wie er zu Figur 1 beschrieben wurde. Bei diesem Ausführungsbeispiel wird angenommen, dass der Wischer 1 entsprechend des Pfeils r nach rechts über die Scheibe 10 gleitet. Der Anschlagsteg 4 berührt daher den Doppelsteg 9 an der linken Seite und die Wischleiste 8 ist entsprechend nach links gekippt.

Wie Figur 2 weiter entnehmbar ist, weist das Wischerblatt 6 mit dem elastischen Gummi einen Doppelsteg 9 auf, der kastenförmig mit einem Hohlprofil ausgebildet ist. In dieses Hohlprofil ist die Federleiste 2 eingeführt. Die Federleiste 2 erfüllt hier die gleiche Funktion, wie sie bereits zu Figur 1 beschrieben wurde. Zur Einleitung der Andruckkraft P ist an einer geeigneten Stelle, beispielsweise in der Mitte des Doppelsteges 9 oder alternativ seitlich versetzt eine Aussparung im elastischen Gummi ausgebildet. Durch die Aussparung ist ein Adapter 7 (siehe Figur 3) nach oben herausgeführt und mit dem Wischarm verbunden. Der Wischarm erzeugt die Andruckkraft P, die über den Adapter 7 direkt auf die Federleiste 2 übertragen und von dieser über die gesamte Länge der Federleiste 2 als lokale Anpresskraft auf die Scheibe 10 verteilt wird.

Anhand der Figuren 3 bis 7 wird der Aufbau und die Funktion der erfindungemäßen Federleiste 2 näher erläutert.

Figur 3 zeigt in schematischer Darstellung eine erfindungsgemäße Federleiste 2 im Längsschnitt. Etwa mittig ist ein Adapter 7 auf der Federleiste 2 fest angeordnet, der mit einem Gelenk zu Aufnahme des Wischerarms ausgebildet ist. Auf den Adapter 7 wirkt nach der Montage an der Scheibe 10 die Andruckkraft P. Die Höhe der Federleiste 2 ist am Schnitt A mit d1 am größten. Mit zunehmenden Abstand vom Schnitt A nimmt die Höhe ab und erreicht am Außenrand der Federleiste 2 am Schnitt B einen kleineren Wert d2.

Die Federleiste 2 ist aus einem Federstahl oder einem geeigneten Kunststoff gefertigt und ist mit einem gewissen Radius vorgespannt, wie später noch näher erläutert wird.

Die Federleiste 2 ist aus einem dünnwandigen Rohr oder alternativ aus einem drei- oder Vierkantrohrprofil oder aus einen U-Profil geformt. Erfindungswesentlich ist, dass die Steifigkeit der Federleiste 2 in Wirkrichtung der Anpresskraft auf die Scheibe 10 durch einfaches Flachwalzen des Rohres beziehungsweise der Stege des U-Profils erfolgt. Die Steifigkeit wird zwischen einem Maximalwert und einem Minimalwert vorgegeben. Der Maximalwert wird in Abhängigkeit von der Materialfestigkeit, der Wandstärke, der Steghöhe des U-Profils beziehungsweise des Rohrdurchmessers bestimmt. Der Minimalwert wird aus der Materialfestigkeit und der doppelten Wandstärke des U-Profils beziehungsweise dem halben Rohrumfang bestimmt. Für die lokale Steifigkeit liegt erfindungsgemäß eine Optimierung vor, wenn der Wert zwischen dem Maximalwert und dem Minimalwert liegt.

Durch optimierte Auslegung einer solchen Federleiste 2 bezüglich des Biegeradius und der lokalen Steifigkeit wird eine gleichmäßigere Verteilung der Anpresskraft über die gesamte Länge der Federleiste 2 erreicht. Damit wird auch bei veränderten Scheibenradien beim Wischvorgang ein zuverlässigeres Wischverhalten erzielt. Durch die verbesserte Auslegung kann die Anpresskraft, mit der die Wischleiste 8 gegen die Scheibe gedrückt wird, erhöht werden. Durch die erhöhte Anpresskraft auf die Wischleiste 8 können Windeffekte und Schwankungen des Krümmungsradius der Scheibe 10, die zu einer Verringerung der Anpresskraft führen können, kompensiert werden. Dieses führt zu einer höheren Zuverlässigkeit des Wischsystems und einer Verbesserung der Wischergebnisse.

Die Figuren 4 bis 7 zeigen an zwei erfindungsgemäßen Ausführungsbeispielen jeweils Schnittbilder an den Stellen A und B von der in Figur 3 dargestellten Federleiste 2.

Das Schnittbild A in Figur 4 zeigt eine rohrförmig ausgebildete Federleiste 2. Auf dem Rohr ist der Adapter 7 fest angeordnet und beispielsweise als Vierkant ausgebildet. Das Rohr ist in diesem Bereich nicht zusammengedrückt und weist hier die höchste Steifigkeit auf.

Bei dem Schnittbild B der Figur 5 wurde das Rohr der Figur 4 durch einfaches Flachwalzen zusammengedrückt, so dass seine Steifigkeit in diesem Bereich (Randbereich) niedriger ist. Zwischen den beiden Schnitten A und B kann über die Länge der Federleiste 2 nach Bedarf und entsprechend den Erfordernissen aus Anpresskraft und Scheibenradien der Grad des Flachwalzens nach Belieben variiert und angepasst werden.

Die Figuren 6 und 7 zeigen vergleichbare Verhältnisse eines zweiten Ausführungsbeispiel einer Federleiste 2. Hier wurde an Stelle eines Rohres ein U-Profil verwendet. Figur 6 zeigt am Schnitt A ein nicht zusammengepresstes U-Profil, das in diesem Bereich die größte Steifigkeit aufweist. Das U-Profil ist nach oben offen. An den Seitenflanken des U-Profils ist ein angepasster Adapter 7 angeordnet. Beim Schnitt B der Figur 7 sind die Seitenflanken des U-Profils zusammengepresst, so dass sich die Steifigkeit entsprechend reduziert. Die Funktion ist die gleiche, wie sie zuvor beschrieben wurde.

## Patentansprüche

1. Federleiste für einen Wischer (1), der insbesondere für die Reinigung einer Fahrzeugscheibe (10) ausgebildet ist, **dadurch gekennzeichnet,**
- **dass** die Federleiste (2) ein Hohlprofil oder ein U-Profil aufweist.

2. Federleiste nach Anspruch 1, **dadurch gekennzeichnet, dass** das Hohlprofil oder das U-Profil entlang der Federleiste (2) unterschiedliche Querschnitte und/oder Steifigkeiten aufweist.

3. Federleiste nach einem der vorhergehenden Ansprüche, **dadurch gekennzeichnet, dass** die Federleiste (2) im Bereich einer punktförmigen Andruckkraft (P) eine hohe Steifigkeit und in den Randbereichen der Federleiste (2) eine niedrigere Steifigkeit aufweist.

4. Federleiste nach einem der vorhergehenden Ansprüche, **dadurch gekennzeichnet, dass** das Hohlprofil rohrförmig ausgebildet ist.

5. Federleiste nach einem der vorhergehenden Ansprüche, **dadurch gekennzeichnet, dass** die Materialstärke (d1,d2) des Hohlprofils oder des U-Profils über die Länge der Federleiste (2) variiert und **dadurch** die Federleiste (2) eine ortsabhängige Steifigkeit aufweist.

6. Federleiste nach einem der vorhergehenden Ansprüche, **dadurch gekennzeichnet, dass** das Hohlprofil oder das U-Profil aus einem Federstahl oder einem Kunststoff gefertigt ist.

7. Federleiste nach einem der vorhergehenden Ansprüche, **dadurch gekennzeichnet, dass** die Federleiste (2) mit einer Öffnung, beispielsweise mit wenigstens einer Bohrung oder einem Längsschlitz und/oder einer Klemmvorrichtung für ein Wischerblatt (6) ausgebildet ist.

8. Verfahren zur Herstellung einer Federleiste (2) nach einem der vorhergehenden Ansprüche, **dadurch gekennzeichnet, dass** das Hohlprofil oder das U-Profil zur Herstellung unterschiedlichen Steifigkeiten ortsabhängig durch Flachdrücken, beispielsweise durch Verändern eines Flachwalzgrades eingestellt wird.

9. Wischer für die Reinigung insbesondere einer Scheibe (10) eines Kraftfahrzeugs, mit einem Wischerblatt (6) und mit einer Federleiste (2), **dadurch gekennzeichnet, dass** die Federleiste (2) in Form eines Hohlprofils oder eines U-Profils ausgebildet ist.

10. Wischer nach Anspruch 10, **dadurch gekennzeichnet, dass** das Hohlprofil rohrförmig ausgebildet ist.

11. Wischer nach Anspruch 9 oder 10, **dadurch gekennzeichnet, dass** das Wischerblatt (6) mit wenigstens einem Noppen oder einem Längssteg ausgebildet ist und dass der Noppen oder der Längssteg zur Befestigung in eine Bohrung oder einen Längsschlitz der Federleiste (2) einführbar ist.

12. Wischer nach Anspruch 9 oder 10, **dadurch gekennzeichnet, dass** das Wischerblatt (6) einen elastischen Gummi mit einem Hohlprofil aufweist und dass die Federleiste (2) in das Hohlprofil einlegbar oder fixierbar ist.
